(19) Europäisches Patentamt
European Patent Office
Office européen des brevets

(11) Veröffentlichungsnummer: **0 307 785 B1**

(12) **EUROPÄISCHE PATENTSCHRIFT**

(45) Veröffentlichungstag der Patentschrift: **11.12.91**

(51) Int. Cl.5: **D01D 5/42**, B65H 45/09

(21) Anmeldenummer: **88114618.7**

(22) Anmeldetag: **07.09.88**

# (54) Verfahren und Vorrichtung zur Herstellung doppellagiger verstreckter Bändchen.

(30) Priorität: **14.09.87 DE 3730825**
**17.12.87 DE 3742915**
**06.05.88 DE 3815603**
**24.06.88 DE 3821404**

(43) Veröffentlichungstag der Anmeldung:
**22.03.89 Patentblatt 89/12**

(45) Bekanntmachung des Hinweises auf die Patenterteilung:
**11.12.91 Patentblatt 91/50**

(84) Benannte Vertragsstaaten:
**AT DE FR GB IT**

(56) Entgegenhaltungen:
**DE-C- 2 328 639**
**GB-A- 1 039 488**
**US-A- 2 366 130**

(73) Patentinhaber: **Windmöller & Hölscher**
**Münsterstrasse 50**
**W-4540 Lengerich(DE)**

(72) Erfinder: **Bosse, Frank**
**Bodelschwinghweg 16**
**W-4542 Tecklenburg(DE)**
Erfinder: **Lage, Karl-Heinz**
**Ringeler Strasse 50**
**W-4540 Lengerich(DE)**

(74) Vertreter: **Gossel, Hans K., Dipl.-Ing. Lorenz-Seidler-Gossel et al**
**Widenmayerstrasse 23**
**W-8000 München 22(DE)**

**EP 0 307 785 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung doppellagiger verstreckter Bändchen aus thermoplastischem Kunststoff und eine Vorrichtung zur Herstellung von auf sich gefalteten Bändchen.

Großvolumige sogenannte Containersäcke bestehen aus einem reißfesten Gewebe aus verstreckten Bändchen aus thermoplastischem Kunststoff, die diesem Gewebe eine Festigkeit verleihen, daß die Containersäcke mit Füllgewichten von z.B. mehr als 1 t belastet werden können. Um die Füllgewichte noch weiter erhöhen zu können, ist es erforderlich, das Quadratmetergewicht des Gewebes zu erhöhen. Die spezifische Reißfestigkeit der Bändchen nimmt mit steigender Dicke ab. Um durch eine Erhöhung des Quadratmetergewichtes des Gewebes die Festigkeit zu erhöhen, ist es bekannt, die die Schuß- und Kettfäden bildenden Bändchen aufeinander zu legen, so daß sich doppellagige Bändchen ergeben. Derartige doppellagige Bändchen bedingen jedoch einen höheren maschinellen Aufwand und schaffen Schwierigkeiten beim Weben. Schwierigkeiten ergeben sich auch daraus, daß die doppellagigen Bändchen wesentlich schwieriger zu spulen sind als einlagige Bändchen.

Aus der GB-A-1 039 488 sind bereits dekorative Textillitzen oder Garne bekannt, die nach einem gattungsgemäßen Verfahren hergestellt werden, bei denen schmale Polypropylenbänder, die auf sich gefaltet sind, verwendet werden. Gemäß der Offenbarung dieser Entgegenhaltung diente die entsprechende Faltung der Polypropylenbändchen der Schaffung von neuartig dekorativen Textillitzen oder Garnen. Eine Erhöhung der Festigkeit des aus diesen Litzen bestehenden Gewebes ist hier weder angesprochen noch beabsichtigt. Werden nun Bändchen, wie sie aus dieser Veröffentlichung bekannt sind, direkt verwebt, besteht die Gefahr, daß sie auffedern und sich wieder entfalten, so daß kein gleichmäßiges Gewebe erzielt werden kann. Gemäß diesem vorbekannten Stand der Technik sind vielmehr Unregelmäßigkeiten in der Bändchenstruktur gerade erwünscht, da hierdurch ein besonderer dekorativer Effekt erzeugt wird. Derartige unregelmäßige Bändchen führen nun aber auch zusätzlich zu Schwierigkeiten beim Aufspulen.

Aufgabe der Erfindung ist es, ein Verfahren der zuvor angegebenen Art zu schaffen, nach welchem sich doppellagige verstreckte Bändchen herstellen lassen, die sich sowohl beim Wickeln der Spulen wie auch beim Weben wie einsträngige Bändchen verhalten.

Diese Aufgabe wird erfindungsgemäß dadurch gelöst, daß die Bändchen vor ihrem Aufspulen auf die zur Weiterverarbeitung vorgesehene Spule auf sich gefaltet und gleichzeitig thermofixiert werden. Da die Bändchen nach ihrer Thermofixierung noch genügend innere Wärme aufweisen, wird hierdurch ein späteres Auffedern vermieden.

Zweckmäßigerweise werden die beiden seitlichen Bereiche der Bändchen auf deren mittlere Teile gefaltet, so daß die eingefalteten Teile in einer zu dem mittleren Bändchenteil parallelen Ebene liegen. Die Seitenkanten der eingefalteten Teile liegen dicht nebeneinander oder überlappen einander, so daß die Bändchen eine gute Homogenität aufweisen.

Nach einer besonders vorteilhaften Ausgestaltung des erfindungsgemäßen Verfahrens ist vorgesehen, daß die Bändchen im wesentlichen aus einer Mischung aus 90-70 Prozent Polypropylenen und 10-30 Prozent Polyolefinen bestehen. Polypropylene eignen sich besonders zur Herstellung von Bändchen, da insbesondere bei diesen durch uniaxiales Recken eine räumliche Orientierung der Ketten erreicht werden kann, die zu einer Festigkeitssteigerung führt. Andererseits neigen jedoch Polypropylenbändchen nach ihrer Faltung wieder zum Auffalten, da diese nicht oder nur wenig miteinander verkleben und auch durch Thermofixierung die Faltung nicht sicher fixiert werden kann. Werden jedoch den Polypropylenen Polyolefine in einer Menge von 10-30 Prozent zugemischt, wird die Faltung stabil, da die aufeinandergefalteten Lagen unter Wärmeeinwirkung miteinander verkleben. Auf diese Weise wird die unerwünschte Auffaltung der gefalteten Bändchen mit Sicherheit vermieden.

Eine Vorrichtung zur Herstellung von auf sich gefalteter verstreckter und thermofixierter Bändchen nach dem erfindungsgemäßen Verfahren bestehend aus einem Streck- und Fixierwerk mit Galetten, über die eine Bändchenschar in Form aufeinanderfolgender Schlaufen läuft. Sie zeichnet sich erfindungsgemäß dadurch aus, daß zwischen zwei Galetten Faltbleche gefaltet sind, von denen jedes aus einem zu dem einlaufenden Bändchen im wesentlichen parallelen Bodenblech und an dieses seitlich anschließenden schalenförmigen Faltblechen besteht, deren Öffnungen einander zugewandt sind und die sich einander in Laufrichtung bei kleiner werdendem Krümmungsradius auf einen Abstand annähern, der der Breite des ungefalteten Mittelteils der Bändchen entspricht. Zweckmäßigerweise ist in Laufrichtung der Bändchen hinter den Faltblechen eine Walze angeordnet.

Ausführungsbeispiele der Erfindung werden nachstehend anhand der Zeichnung näher erläutert. In dieser zeigt

Fig.1 eine Seitenansicht einer Bändchenreckstrecke in schematischer Darstellung

Fig.2 eine zwischen zwei Galetten des Streckwerks der Bändchenreckanlage angeordnete Falteinrichtung für die Bändchen im Längsschnitt,

Fig. 3 einen Schnitt durch die Falteinrichtung längs der Linie III-III in Fig.2,

Fig.4 eine Ansicht der Falteinrichtung in Richtung des Pfeiles 4 in Fig.2 und

Fig.5 eine Vorrichtung zum Falten kalter verstreckter Bändchen auf sich selbst in schematischer Seitenansicht.

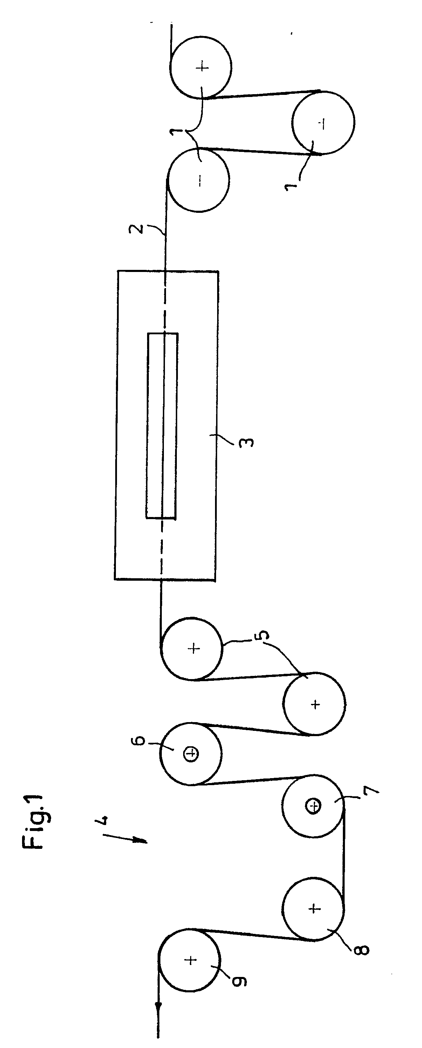

In der schematisch dargestellten Bändchenreckanlage nach Fig.1 läuft eine Schar von Bändchen in Schlaufenform über die Walzen 1 eines Haltewerkes. Von dem Haltewerk läuft die Schar der Bändchen 1 in einem Heißluftofen 3 ein, der üblicher Bauart ist. Die aus dem Heißluftofen 3 austretende Schar der Bändchen 2 durchläuft sodann ein sogenanntes Streck- und Fixierwerk 4. Dieses besteht aus den Galetten 5-7, von denen eine oder mehrere beheizt sind. Die Galetten 5-7 bilden das sogenannte Streckwerk. Im Anschluß an die letzte beheizte Walze oder Galette durchläuft die Schar der Bändchen 2 den sogenannten Fixierteil des Streck-und Fixierwerkes. Dieser wird durch die Galetten 8 und 9 gebildet, deren Umfangsgeschwindigkeit kleiner ist als die Umfangsgeschwindigkeit der letzten Galette 7 des Streckwerkes, so daß die einzelnen Bändchen 2 zurückschrumpfen können und dabei fixiert werden.

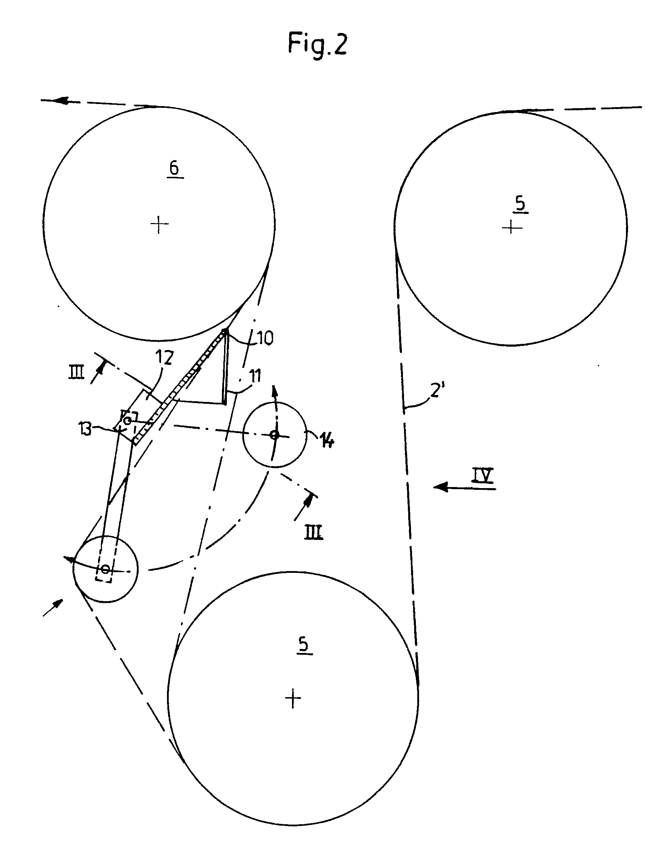

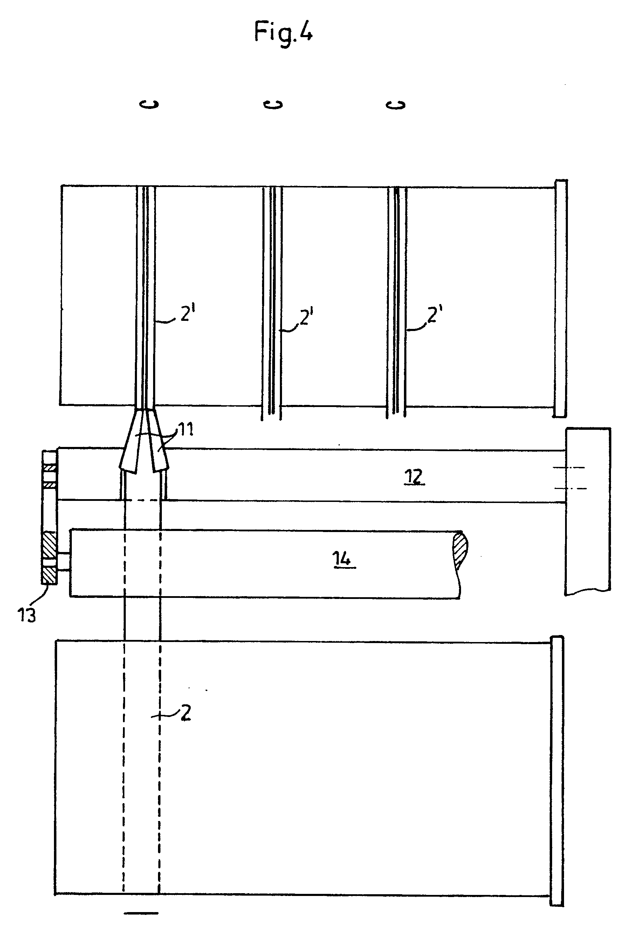

Wie aus Fig.2 ersichtlich ist, ist zwischen der Galette 5 und der Galette 6 eine Einrichtung zum Falten der einzelnen Bändchen vorgesehen. Diese Einrichtung besteht im wesentlichen aus einer ebenen Grundplatte 10, die von einer in Laufrichtung der Bändchen zusammenlaufenden geschlitzten konischen Abdeckung 11 umgeben ist. Das Faltstück ist auf einem gehäusefesten Träger 12 einstellbar montiert, der, wie aus Fig.4 ersichtlich ist, seitliche Schwenkarme 13 aufweist. Diese seitlichen Schwenkarme 13 tragen eine Walze 14, die in nicht dargestellter Weise sowohl in der mit vollen Linien dargestellten Arbeitsstellung wie auch in der mit gestrichelten Linien dargestellten Neutralstellung festgelegt werden kann. Durch die Falteinrichtung werden die Bändchen 2 auf sich gefaltet. Die gefalteten Bändchen 2' sind oberhalb der Walze 6 in Figur 4 im Querschnitt dargestellt. Die gefalteten Bändchen 2' werden durch die nachfolgende beheizte Galette 6 aufgeheizt, so daß die aufeinanderliegenden Lagen zusätzlich noch miteinander verkleben können.

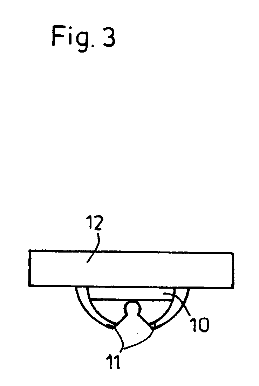

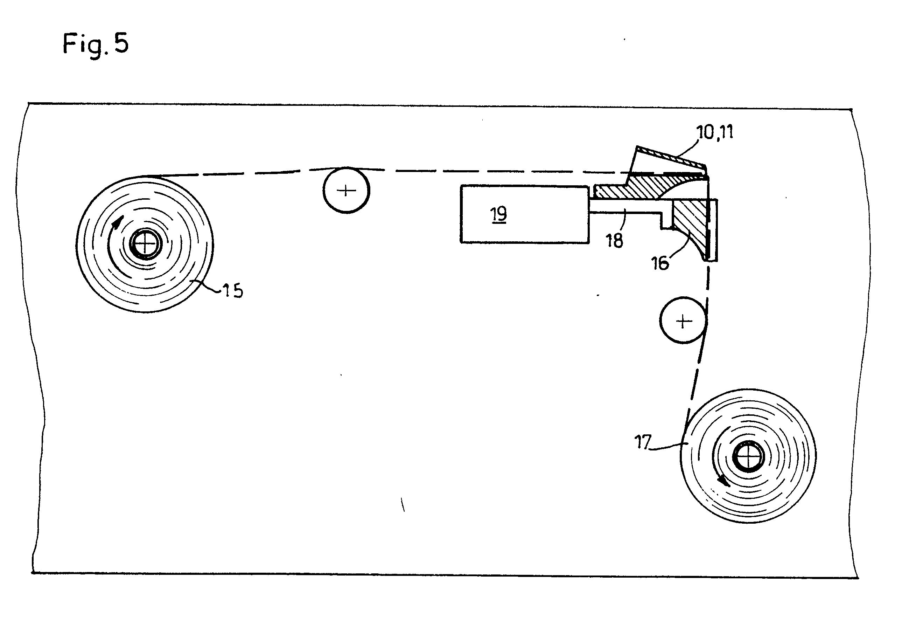

Fig.5 zeigt eine andere Vorrichtung, bei der ein breiteres Bändchen von der Spule 15 abgewickelt wird. Dieses breitere abgewickelte Bändchen wird durch die Falteinrichtung gezogen und dadurch auf sich gefaltet. Das gefaltete Bändchen wird in der dargestellten Weise umgelenkt und über ein Führungsstück 16 auf eine zweite Spule 17 als auf sich gefaltetes Bändchen aufgewickelt. Der Halter 18 für die Falteinrichtung 10,11, die in grundsätzlich gleicher Weise aufgebaut ist, wie die anhand der Figuren 2-4 beschriebene und das Führungsstück 16 sind in einem Gehäuse 19 parallel zu den Achsen der Spulen 15 und 16 hin- und herbewegbar gelagert, um die Spule 17 über die gesamte Breite gleichmäßig bewickeln zu können.

Anstatt von der Spule 15 kann das breite Bändchen selbstverständlich auch direkt von einer Reckstrecke angeliefert werden.

**Patentansprüche**

1. Verfahren zur Herstellung doppellagiger verstreckter Bändchen aus thermoplastischem Kunststoff,

   **dadurch gekennzeichnet,**

   daß die Bändchen vor ihrem Aufspulen auf die zur Weiterverarbeitung vorgesehene Spule auf sich gefaltet und thermofixiert werden.

2. Verfahren nach Anspruch 1, dadurch gekennzeichnet, daß die Bändchen vor oder nach der Verstreckung auf sich gefaltet und thermofixiert werden.

3. Verfahren nach Anspruch 1 oder 2, dadurch gekennzeichnet, daß die Bändchen aus einer Mischung aus ca. 90-70 % Polypropylen und ca. 10-30 % Polyolefinen bestehen.

4. Verfahren nach einem der Ansprüche 1-3, dadurch gekennzeichnet, daß die beiden seitlichen Bereiche der Bändchen auf deren mittlere Teile gefaltet werden.

5. Vorrichtung zur Herstellung von auf sich gefalteten Bändchen nach Anspruch 4, bestehend aus einem Streck- und Fixierwerk mit Galetten, über die die Bändchenschar in Form aufeinanderfolgender gegensinnig offener Schlaufen läuft, dadurch gekennzeichnet, daß zwischen zwei Galetten (5, 6) Faltbleche geschaltet sind, von denen jedes aus einem zu dem einlaufenden Bändchen (2) im wesentlichen parallelen Bodenblech (10) und an diese seitlich anschließenden schalenförmigen Faltblechen (11) besteht, deren Öffnungen zueinander zugewandt sind und die sich einander in Laufrichtung bei kleiner werdendem Krümmungsradius bis auf einen Abstand annähern, der in etwa der Breite der umgefalteten Mittelteile der Bändchen (2) entspricht und daß die gefalteten Bändchen (2') durch die nachfolgend beheizte Galette (6) aufgeheizt werden, so daß die aufeinanderliegenden Lagen zusätzlich noch miteinander verkleben können.

6. Vorrichtung nach Anspruch 5, dadurch gekennzeichnet, daß in Laufrichtung der Bändchen (2) hinter den Faltblechen eine Walze (14) angeordnet ist.

## Claims

1. Method for the manufacture of two-ply drawn tapes made of a thermoplastic synthetic material,
characterized in that
before being wound up on the spool provided for further processing, the tapes are folded onto themselves and are heat set.

2. Method according to claim 1, characterized in that the tapes are folded onto themselves and heat set before or after the drawing.

3. Method according to claim 1 or 2, characterized in that the tapes consist of a mixture of approximately 90-70 % polypropylene and approximately 10-30 % polyolefins.

4. Method according to one of claims 1-3, characterized in that the two lateral zones of the tapes are folded onto their median portions.

5. Apparatus for the manufacture of tapes folded onto themselves according to claim 4, consisting of a drawing and setting device with godet rollers over which the tape set is running in the form of successive loops open in the opposite directions, characterized in that between two godet rollers (5, 6) there are disposed folding plates, each of which consists of a base plate (10) disposed substantially parallel to the entering tape (2) and, adjoining them at the sides, of dish-shaped folding plates (11) whose openings face each other and move towards each other in the running direction as the radius of curvature becomes smaller, down to a distance corresponding approximately to the width of the median portions of the tapes (2) covered by the folds, and in that the folded tapes (2') are heated by the heated godet roller (6) down the line, so that the superposed layers can be additionally bonded together.

6. Apparatus according to claim 5, characterized in that in the running direction of the tapes (2), a roller (14) is arranged behind the folding plates.

## Revendications

1. Procédé pour fabriquer des rubans étirés doubles en matière thermoplastique,
caractérisé en ce que
les rubans sont repliés et thermofixés avant leur bobinage sur les bobines prévues pour leur traitement ultérieur.

2. Procédé selon la revendication 1, caractérisé en ce que les rubans sont repliés et thermofixés avant ou après leur étirage.

3. Procédé selon la revendication 1 ou 2, caractérisé en ce que les rubans sont à base d'un mélange d'environ 90-70% de polypropylène et d'environ 10-30% de polyoléfines.

4. Procédé selon les revendications 1-3, caractérisé en ce que les deux bandes latérales des rubans sont repliées sur la partie centrale de ceux-ci.

5. Dispositif pour la fabrication de rubans repliés selon la revendication 4, constitué d'un mécanisme d'étirage et de fixation comportant des galettes sur lesquelles passe la masse des rubans sous forme de boucles successives ouvertes en sens inverse, caractérisé en ce qu'entre deux galettes (5,6) sont montées des tôles de pliage, chacune d'elles étant constituée d'une tôle de fond (10), essentiellement parallèle au ruban (2) qui se présente, et s'y raccordant latéralement de tôle de pliage (11), en forme de cuvette, dont les ouvertures se font face et qui, dans la direction de déroulement se rapprochent l'une de l'autre selon un rayon de courbure qui se rétrécit jusqu'à ce que l'écartement des tôles de pliage corresponde sensiblement à la largeur des parties centrales, autour desquelles les rubans (2) sont repliés et enc e que les rubans repliés (2') sont chauffés par la galette suivante (6),, qui est chauffante, si bien que les couches reposant l'une sur l'autre peuvent être encore en plus collées ensemble.

6. Dispositif selon la revendication 5, caractérisé en ce que, dans la direction de déroulement des rubans (2), un rouleau (14) est placé en amont des tôles de pliage.

Fig.1
1
1
1
2
3
4
5
6
7
8
9

Fig.2

6
5
10
12
III
11
2'
13
14
IV
III
5

Fig. 3

12
10
11

2'
2'
2'
11
12
14
13
2

Fig.4

Fig. 5
10,11
16
17
18
19
15